# EUROPÄISCHE PATENTSCHRIFT

(11) **EP 0 959 104 B1**
(45) Veröffentlichungstag und Bekanntmachung des Hinweises auf die Patenterteilung: **02.02.2005**
(21) Anmeldenummer: 99107248.9
(22) Anmeldetag: 14.04.1999
(51) Int. Cl.: C08L 75/04

(54) **Mischungen enthaltend thermoplastisches Polyurethan**
Blends containing thermoplastic polyurethane
Mélanges contenant un polyuréthane thermoplastique

(30) Priorität: 19.05.1998 DE 19822387
(43) Veröffentlichungstag der Anmeldung: 24.11.1999
(73) Patentinhaber: BASF AKTIENGESELLSCHAFT, 67056 Ludwigshafen (DE)
(72) Erfinder: Brüning, Ines Dr., 49356 Diepholz (DE); Chlosta, Andreas, 49448 Lemförde (DE); Scholz, Günter Dr., 49448 Lemförde (DE)

(56) Entgegenhaltungen:
- EP-A- 0 353 673
- EP-A- 0 354 431
- JP-A- 9 255 868
- US-A- 5 109 050
- CHEMICAL ABSTRACTS, vol. 122, no. 2, 9. Januar 1995 (1995-01-09) Columbus, Ohio, US; abstract no. 11504f, Seite 62; XP000666871 & JP 06 145500 A (TOYODA GOSEI)

## Beschreibung

Die Erfindung betrifft Mischungen enthaltend (a) thermoplastisches Polyurethan mit einer Shore-Härte von 60 A bis 50 D und (b) unmodifizierte Ethylen-Propylen-(EPM)-Kautschuke und/oder modifizierte Ethylen-Propylen-(EPM)-Kautschuke, die mit Acrylsäure, Methacrylsäure, deren Derivaten und/oder Maleinsäureanhydrid gepfropft sind, wobei das Gewichtsverhältnis von (a): (b) 3:1 bis 999:1, bevorzugt 6:1 bis 100:1 beträgt.

Thermoplastische Polyurethane, im Folgenden auch als TPU bezeichnet, sind allgemein bekannt. Sie zeichnen sich als Werkstoffe durch hohe Festigkeit bei gleichzeitig guter Elastizität aus. Neben diesen hervorragenden Eigenschaften ist für viele Anwendungsbereiche zudem eine hohe Abriebbeständigkeit wünschenswert. Zur Verminderung des Abriebes sind in der Literatur Mischungen von TPU mit Kautschuken auf der Basis von Ethylen-Propylenpolymeren beschrieben. So offenbart JP-A 09 255 868 allgemein Mischungen enthaltend TPU und Ethylen-Propylen-Kautschuke, die mit aromatischen, ungesättigten Verbindungen sowie mit ungesättigten Substanzen, die polare, funktionelle Gruppen aufweisen, modifiziert sind. Darüber hinaus erfolgt eine weitere Modifizierung durch Mischung der genannten Ethylen-Propylen-Kautschuke mit Styrol und 2-Hydroxyethyl-methacrylat und verschiedenen Additiven. Die Gewichtsverhältnisse von TPU zu modifiziertem Kautschuk betragen im Beispiel 2,3:1. Nachteilig an diesen Mischungen wirkt sich die Zugabe von ungesättigten aromatischen Verbindungen aus, die in einigen Anwendungen nicht wünschenswert sind. Zudem zeigen diese Mischungen mit dem hohen Anteil an Kautschuk wie erwartet keine Verminderung des Abriebes im Vergleich zu reinen TPUs. Dieses Ergebnis ist konsistent mit Befunden von TPU in Mischung mit anderen Kunststoffen. In der Regel wird die Anordnung der Weichsegmente und der Hartsegmente, die in den TPU zu den hervorragenden Eigenschaften dieser Werkstoffe führt, durch die Zumischung von weiteren Kunststoffen gestört. In der Regel führt die Zumischung von anderen Kunststoffen zum TPU damit zu einer Verschlechterung der Eigenschaften im Vergleich zum reinen TPU. Weitere TPU-Kautschukmischungen werden in JP-A 06 145 500, US 5 149 739, J0 3035-054 und J0 3035-056 beschrieben.

Der vorliegenden Erfindung lag deshalb die Aufgabe zugrunde, Mischungen auf der Basis von TPU zu entwickeln, die im Vergleich zu reinen TPUs einen deutlich verminderten Abrieb zeigen, ohne Nachteile in den sonstigen Eigenschaften, beispielsweise in bezug auf die Zugfestigkeit, aufzuweisen.

Diese Aufgabe konnte erfindungsgemäß durch die eingangs beschriebenen Mischungen gelöst werden.

Die in dieser Schrift genannten Shore-Härten werden nach DIN 53 505 gemessen.

Als TPU (a) können in den erfindungsgemäßen Mischungen allgemein übliche TPU, die die erfindungsgemäße Härte aufweisen, verwendet werden, die nach bekannten Verfahren aus (c) Isocyanaten, (d) gegenüber Isocyanaten reaktiven Verbindungen und gegebenenfalls (e) Kettenverlängerungsmitteln gegebenenfalls in Gegenwart von (f) Katalysatoren und/oder (g) Hilfs- und/oder Zusatzstoffen hergestellt werden können, wobei das Verhältnis der Isocyanatgruppen der Komponente (c) zur Summe der gegenüber den Isocyanaten reaktiven Gruppen der Komponenten (d) und gegebenenfalls (e) üblicherweise 1:0,9 bis 1:1,1 beträgt.

Im Folgenden werden beispielhaft die Ausgangskomponenten sowie Herstellverfahren für (a) und (b) dargestellt.
c) Als organische Isocyanate (c) kommen vorzugsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4- und/oder 1,3-Bis(isocyanatomethyl)cyclohexan (HXDI), 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 3,3'-Dimethyl-4,4'-biphenyldiisocyanat (TODI), p-Phenylendiisocyanat (PDI), m-, p-Xylylendiisocyanat (XDI), 4,4'-, 2,4'- und 2,2'-Diphenylmethan-diisocyanat (MDI), Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanato-diphenylethan-(1,2) (EDI) und 1,5-Naphthylen-diisocyanat. Vorzugsweise verwendet werden 1,5-Naphthylen-diisocyanat, 4,4'-Bicyclohexyl-methan-diisocyanat, Hexamethylen-diisocyanat-1,6, Diphenylmethan-diisocyanat-Isomerengemische mit einem 4,4'-Diphenylmethan-diisocyanatgehalt von größer als 96Gew.% und insbesondere 4,4'-Diphenylmethan-diisocyanat und Hexamethylen-diisocyanat-1,6.
d) Als gegenüber Isocyanaten reaktive Substanzen (d) eignen sich beispielsweise Polyhydroxylverbindungen mit Molekulargewichten von 500 bis 8000, vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU basieren üblicherweise zumindest überwiegend auf difunktionellen gegenüber Isocyanaten reaktiven Substanzen, d.h. die mittlere Funktionalität der Komponente (d) beträgt vorzugsweise 1,8 bis 2,6, besonders bevorzugt 1,9 bis 2,2. Die TPU sind somit vorwiegend unverzweigt, d.h. überwiegend nicht vernetzt, aufgebaut.

Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 reaktive Wasserstoffatome gebunden enthält. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyl-diethanolamin und Diole, z.B. Alkandiole oder Dialkylenglykole mit 2 bis 12 Kohlenstoffatomen, vorzugsweise 2 bis 6 Kohlenstoffatomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.

Solche Polyetherole können erhalten werden, indem man z.B. an das Startermolekül zunächst das Propylenoxid-1,2 und,daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im Falle der TPU im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol- 1,4-butandiol-polyadipate.

Die Polyesterole besitzen Molekulargewichte (Gewichtsmittel) von 500 bis 6000, vorzugsweise von 800 bis 3500.
e) Als Kettenverlängerungsmittel (e), die üblicherweise Molekulargewichte von 60 bis 499, vorzugsweise 60 bis 300 aufweisen, kommen vorzugsweise Alkandiole mit 2 bis 12 Kohlenstoffatomen, vorzugsweise mit 2,4 oder 6 Kohlenstoffatomen, wie z.B. Ethandiol, Hexandiol-1,6, und insbesondere Butandiol-1,4 und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4, Hydroxyalkylenether des Hydrochinons, wie z.B. 1,4-Di-(β-hydroxyethyl)-hydrochinon, (cyclo) aliphatische Diamine, wie z.B. 4,4'-Diaminodicyclohexylmethan, 3,3'-Dimethyl-4,4'-diaminodicyclohexylmethan, 1-Amino-3,3,5-trimethyl-5-aminomethyl-cyclohexan, Ethylendiamin, 1,2-, 1,3-Propylen-diamin, N-Methyl-propylendiamin-1,3, N,N'-Dimethylethylendiamin und aromatische Diamine, wie z.B. 2,4- und 2,6-Toluylen-diamin, 3,5-Diethyl-2,4- und -2,6-toluylen-diamin und primäre, ortho-di-, -tri- und/oder -tetraalkylsubstituierte 4,4'-Diamino-diphenylmethane. Als Kettenverlängerungsmittel finden vorzugsweise Verwendung Alkandiole mit 2 bis 6 Kohlenstoffatomen im Alkylenrest, insbesondere Butandiol-1,4 und/oder Dialkylenglykole mit 4 bis 8 Kohlenstoffatomen.
   Zur Einstellung der erfindungsgemäßen Härte der TPUs und der Schmelzpunkte der TPUs werden die Aufbaukomponenten (d) und (e) üblicherweise in einem molaren Verhältnis (d) : (e) von 1: 0,8 bis 1: 10, bevorzugt 1: 1 bis 1: 6,4 variiert, wobei die Härte und der Schmelzpunkt der TPU mit zunehmendem Gehalt an Diolen ansteigt. Bevorzugt werden TPU auf der Basis von:
   (c) 4,4'-Diphenylmethandiisocyanat (MDI), und/oder Hexamethylendiisocyanat, (d) Polyoxytetramethylenglykol, Polyetherole auf Basis Propylenoxid-1,2 und Ethylenoxid und/oder Polyesterole auf Basis Alkandiolpolyadipat mit 2 bis 6 Kohlenstoffatomen im Alkylenrest, (e) Ethandiol-1,2, Butandiol-1,4, Ethandiol und/oder Hexandiol-1,6 eingesetzt, wobei das Verhältnis der Isocyanatgruppen der Komponente (c) zur Summe der gegenüber den Isocyanaten reaktiven Gruppen der Komponenten (d) und (e) bevorzugt 1:0,9 bis 1:1,1 beträgt und (d) und (e) in einem molaren Verhältnis von (d) : (e) von 1: 1 bis 1: 6,4 eingesetzt werden.
f) Geeignete Katalysatoren, welche insbesondere die Reaktion zwischen den NCO-Gruppen der Diisocyanate (c) und den Hydroxylgruppen der Aufbaukomponenten (d) und (e) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (d) eingesetzt.
g) Neben Katalysatoren können den Aufbaukomponenten (c) bis (e) auch übliche Hilfsmittel und/oder Zusatzstoffe (g) hinzugefügt werden. Genannt seien beispielsweise oberflächenaktive Substanzen, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Die Herstellung der TPUs aus beispielsweise den beschriebenen Ausgangskomponenten ist allgemein bekannt und vielfach beschrieben. Z.B. kann das Reaktionsgemisch enthaltend (c), (d) und gegebenenfalls (e), (f) und/oder (g) nach den bekannten one-shotoder nach dem Prepolymerverfahren umgesetzt werden, beispielsweise in einem Reaktionsextruder und/oder auf einer üblichen Bandanlage. Die derart hergestellten TPUs können anschließend pelletiert oder granuliert werden und mit der Komponente (b) zu den erfindungsgemäßen, bevorzugt homogenen Mischungen verarbeitet werden.

Erfindungsgemäß enthalten die Mischungen als Komponente (b) unmodifiziertes Ethylen-Propylen (EPM) bzw. modifizierte Ethylen-Propylen-Kautschuke, die mit Acrylsäure, Methacrylsäure, deren Derivaten und/oder Maleinsäureanhydrid gepfropft sind. Diese Kautschuke auf der Basis von Ethylen und Propylen, ihre Herstellung und ihre Eigenschaften sind vielfach beschrieben und allgemein bekannt. Derartige Kautschuke sind zudem kommerziell erhältlich.

Die EPM- bzw. modifizierten EPM-Kautschuke weisen bevorzugt eine Viskosität gemessen nach Mooney L(1+4) bei 100 °C von > 35 bzw. einen MFR (230 °C, 10 kg) von > 8 auf.

Die modifizierten EPM-Kautschuke sind mit reaktiven Carbonsäuren oder deren Derivaten, ausgewählt aus Acrylsäure, Methacrylsäure und deren Derivate, z.B. Glycidyl(meth)acrylat, sowie Maleinsäureanhydrid, gepfropft.

Bevorzugt wird (b) unmodifiziert oder gepfropft mit Acrylsäure, Methacrylsäure, deren Derivaten und/oder Maleinsäureanhydrid in den erfindungsgemäßen Mischungen eingesetzt.

Die erfindungsgemäßen Mischungen können bevorzugt zusätzlich zu (a) und (b) Hilfs- und/oder Zusatzstoffe, beispielsweise Weichmacher, Lichtschutzmittel, Gleitmittel, Treibmittel, Haftvermittler, Füllstoffe, oberflächenaktive Substanzen, Flammschutzmittel, Farbstoffe und Pigmente, Stabilisatoren gegen Hydrolyse, Licht, Hitze oder Verfärbung, Farbstoffe und/oder Verstärkungsmittel enthalten. Diese Hilfs- und/oder Zusatzstoffe können sowohl bereits bei der Herstellung der TPU, wie bereits beschrieben, eingesetzt werden, als auch der Komponente (a) und/oder (b) bei der Herstellung der Mischung zugesetzt werden.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der β-(3,5-di-tertiärbutyl-4-hydroxyphenyl)-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertiärbutyl-4-methylphenol, Pentaerythrityl-tetrakis-[3-(3,5-ditertiärbutyl-4-hydroxyphenyl)-propionat und N,N'-Di-(3.5-ditertiärbutyl-4-hydroxyphenyl-propionyl)-hexamethylendiamin erwähnen. Die genannten Stabilisatoren können einzeln oder in Mischungen verwendet werden.

Bei der Mischung der Komponenten (a) und (b) liegen diese bevorzugt in einem fließfähigen, erweichten oder geschmolzenen Zustand vor. Das homogene Vermischen der Komponenten erfolgt bevorzugt bei Temperaturen, die über den Schmelztemperaturen von (a) und (b) liegen. Üblicherweise beträgt die Temperatur, bei der die Vermischung der Komponenten erfolgt, 160 bis 250 °C, vorzugsweise 190 bis 240 °C, besonders bevorzugt 200 bis 230 °C. Das Vermischen der Komponenten zu einem homogenen Produkt kann mit üblichen Geräten, die Einrichtungen zum Heizen und Rühren, Kneten oder Walzen aufweisen, kontinuierlich oder diskontinuierlich bevorzugt mit Entgasung durchgeführt werden. Bevorzugt erfolgt das Vermischen der Komponenten (a) und (b) in einem üblichen Extruder.

Die erfindungsgemäßen Mischungen, die bevorzugt eine Shore-Härte von 60 A bis 54 D, aufweisen, können beispielsweise pelletiert oder granuliert, oder nach allgemein bekannten Verfahren, beispielsweise durch Extrusion zu Kabelummantelungen, Folien, Schläuchen, Fasern, Profilen und Blasformkörpern extrudiert, durch Spritzguß, zu Schuhschalen, Schuhsohlen, technischen Formteilen, Gebrauchsartikeln und Formkörpern aller Art spritzgegossen oder zu Beschichtungen und Folien kalandriert werden.

Entgegen den Erwartungen aufgrund von Ergebnissen mit anderen Mischungen konnte eine deutliche Verminderung des Abriebes bei den erfindungsgemäßen Mischungen festgestellt werden, wobei keine Nachteile in bezug auf die Zugfestigkeiten auftreten. Dieses Ergebnis ist um so verblüffender, als sonstige Mischungen mit TPU aufgrund der Störung der Hart- und Weichsegmente deutliche Nachteile in den Eigenschaften aufweisen. Diese Vorteile werden be-sonders deutlich im Vergleich zu reinen TPU oder Mischungen enthaltend TPU, die Stand der Technik waren, beispielsweise Mischungen mit einem vergleichsweise hohen Anteil an Kautschuk gemäß JP-A 09 255 868 oder Mischungen, die ein härteres TPU enthalten. Die erfindungsgemäßen Vorteile sind auf TPU mit dem erfindungsgemäßen Härtebereich und zudem auf die erfindungsgemäßen Mischungsverhältnisse begrenzt. Diese Vorteile waren dem Stand der Technik nicht zu entnehmen und sollen in den nachfolgenden Ausführungsbeispielen näher erläutert werden.

### Beispiele:

Verschiedene TPUs wurden in einem Doppelschneckenextruder sowie einem Einwellenextruder bei einer Temperatur von 190 bis 230 oc mit modifiziertem und unmodifiziertem EPM homogenisiert und zu Prüfkörpern verarbeitet. Ebenso wurden die Mischungen per Reaktionsextrusion auf einem dafür üblichen Extruder hergestellt. In der Tabelle 1 sind die verschiedenen Mischung sowie deren Eigenschaften angegeben. Die Angabe zum Gehalt bezieht sich auf den Gehalt an gegebenenfalls modifiziertem EPM in der Mischung bezogen auf das Gesamtgewicht der Mischung.
TPU 1: Elastollan® 1185 A, Elastogran GmbH,
TPU 2: Elastollan® LP 9188, Elastogran GmbH,
TPU 3: Elastollan® 1174 D, Elastogran GmbH,
TPU 4: Elastollan® 1180 A, Elastogran GmbH,
TPU 5: Elastollan® C 85 A, Elastogran GmbH,
TPU 6: Elastollan® S 90 A, Elastogran GmbH,
TPU 7: Elastollan® B 85 A, Elastogran GmbH.

Es wurden sowohl TPUs auf der Basis von Polyethern (TPU 1-4) als auch Polyestern (TPU 5-7) untersucht.
- EPM-Type 1:: EPM, unmodifiziert, Viskosität Mooney
(1+4) bei 125 °C von 10,
MFR (230 °C/10 kg) von 35,
- EPM-Type 2:: EPM-g-MSA (0,6 % MSA), MFR (230 °C/10 kg) von 9,
- EPM-Type 3:: EPM-g-MSA (0,7 % MSA), MFR (230 °C/10 kg) von 22.
- MFR:: melt-flow-rate, gemessen nach DIN ISO 1133.

**Tabelle 1**

| Beispiel | TPU | EPM-Type | Gehalt % | Abrieb mm³ | Zugfestigkeit N/mm² | Dichte g/cm³ | Shore-Härte |
|---|---|---|---|---|---|---|---|
| 1 | 1 | - | - | 24 | 39 | 1,12 | 86 A/37 D |
| 2 | 1 | 1 | 10 | 9 | 39 | 1,09 | 83 A/35 D |
| 3 | 1 | 1 | 10 | 7 | 43 | 1,09 | 84 A/34 D |
| 4 | 1 | 1 | 20 | 23 | 28 | 1,06 | 81 A /33 D |
| 5 | 1 | 1 | 20 | 24 | 38 | 1,06 | 82 A/33 D |
| 6 | 1 | 2 | 10 | 5 | 38 | 1,09 | 84 A/36 D |
| 7 | 1 | 2 | 10 | 5 | 41 | 1,09 | 84 A/36 D |
| 8 | 1 | 2 | 20 | 13 | 34 | 1,065 | 84 A/35 D |
| 9 | 1 | 2 | 20 | 11 | 35 | 1,06 | 84 A/35 D |
| 10 | 1 | 3 | 10 | 7 | 39 | 1,085 | 83 A/35 D |
| 11 | 1 | 3 | 20 | 13 | 33 | 1,055 | 79 A/31 D |
| 12 | 2 | - | - | 49 | 34 | 1,135 | 85 A/38 D |
| 13 | 2 | 1 | 10 | 12 | 37 | 1,115 | 85 A |
| 14 | 2 | 1 | 20 | 42 | 33 | 1,08 | 83 A |
| 15 | 2 | 2 | 10 | 7 | 36 | 1,11 | 86 A |
| 16 | 2 | 2 | 20 | 12 | 33 | 1,08 | 85 A |
| 17 | 2 | 3 | 10 | 11 | 34 | 1,105 | 86 A |
| 18 | 2 | 3 | 20 | 36 | 34 | 1,075 | 83 A |
| 19 (v) | 3 | - | - | 28 | 47 | 1,195 | 75 D |
| 20 (v) | 3 | 1 | 10 | 35 | 49 | 1,15 | 64 D |
| 21 (v) | 3 | 2 | 10 | 30 | 49 | 1,155 | 66 D |
| 22 (v) | 3 | 3 | 10 | 28 | 47 | 1,15 | 64 D |
| 23 | 4 | - | - | 37 | 50 | 1,11 | 82 A |
| 24 | 4 | 3 | 10 | 6 | 35 | 1,075 | 78 A |
| 25 | 4 | 3 | 20 | 29 | 30 | 1,05 | 74 A |
| 26 | 5 | - | - | 34 | 43 | 1,185 | 84 A/34 D |
| 27 | 5 | 1 | 10 | 11 | 36 | 1,145 | 82 A |
| 28 | 5 | 1 | 20 | 30 | 37 | 1,105 | 80 A |
| 29 | 5 | 2 | 10 | 8 | 34 | 1,15 | 83 A |
| 30 | 5 | 2 | 20 | 16 | 31 | 1,11 | 82 A |
| 31 | 6 | - | - | 38 | 48 | 1,235 | 91 A/42 D |
| 32 | 6 | 1 | 10 | 10 | 41 | 1,185 | 90 A |
| 33 | 6 | 2 | 10 | 7 | 45 | 1,185 | 91 A |
| 34 | 6 | 3 | 10 | 8 | 45 | 1,185 | 90 A |
| 35 | 7 | - | - | 36 | 50 | 1,195 | 82 A |
| 36 | 7 | 1 | 10 | 8 | 45 | 1,155 | 82 A |
| 37 | 7 | 2 | 10 | 14 | 32 | 1,155 | 83 A |

Die mit (v) gekennzeichneten Beispiele 19 bis 22 stellen Vergleichsbeispiele dar, die mit vergleichsweise hartem TPU durchgeführt wurden. Der Abrieb dieser Vergleichsmischungen zeigt keine Verbesserung im Vergleich zu reinem TPU. Allerdings kommt es auch zu keiner Verschlechterung der Zugfestigkeit.

Die erfindungsgemäßen Mischung enthaltend weiche TPU und Polyolefine zeigen im Vergleich zum reinen TPU eine unerwartet deutliche Verringerung des Abriebs von bis zu 85 % (siehe Beispiele 12 und 15). Trotz des somit deutlich verbesserten, d.h. verringerten Abriebs zeigen die erfindungsgemäßen Mischungen nur in wenigen Fällen ein geringfügige und damit akzeptable Verschlechterung der Zugfestigkeit.

Die Aufgabe der vorliegenden Erfindung konnte somit durch die erfindungsgemäßen Mischung gelöst werden.

## Patentansprüche

1. Mischung enthaltend
(a) thermoplastisches Polyurethan mit einer Shore-Härte von 60 A bis 50 D und
(b) unmodifizierte Ethylen-Propylen-(EPM)-Kautschuke und/oder modifizierte Ethylen-Propylen-(EPM)-Kautschuke, die mit Acrylsäure, Methacrylsäure, deren Derivaten und/oder Maleinsäureanhydrid gepfropft sind,
wobei das Gewichtsverhältnis von (a) : (b) 3:1 bis 999:1 beträgt.

2. Mischung nach Anspruch 1, **dadurch gekennzeichnet, daß** das Gewichtsverhältnis 6:1 bis 100:1 beträgt.

3. Verwendung von Mischungen gemäß Anspruch 1 zur Herstellung von Kabelummantelungen, Folien, Schläuchen, Fasern, Profilen oder Blasformkörpern durch Extrusion, zur Herstellung von Schuhschalen, Schuhsohlen, technischen Formteilen, Gebrauchsartikeln oder Formkörpern aller Art durch Spritzguß oder von Beschichtungen oder Folien durch Kalandrierung.

4. Kabelummantelungen, Folien, Schläuche, Fasern, Profile, Schuhschalen, Schuhsohlen, technische Formteile, Gebrauchsartikel, Formkörper aller Art, Beschichtungen oder Folien gemäß Anspruch 3.

## Claims

1. A blend comprising
(a) thermoplastic polyurethane having a Shore hardness of from 60 A to 50 D and
(b) unmodified ethylene-propylene monomer (EPM) rubbers and/or modified ethylene-propylene monomer (EPM) rubbers wherein (b) has been grafted with acrylic acid, their derivatives and/or maleic anhydride,
where the weight ratio of (a):(b) is from 3:1 to 999:1.

2. A blend as claimed in claim 1, wherein the weight ratio is from 6:1 to 100:1.

3. The use of a blend as claimed in claim 1 for producing cable sheathing, films, hoses, fibers, profiles or blow-molded articles by extrusion, for producing shoe uppers, shoe soles, industrial moldings, consumer articles or shaped bodies of all types by injection molding or for producing coatings or films by calendering.

4. A cable sheath, a film, a hose, a fiber, a profile, a shoe upper, a shoe sole, an industrial molding, a consumer article, a shaped body of any type, a coating or a calendered film produced as set forth in claim 3.

## Revendications

1. Mélange contenant
(a) du polyuréthanne thermoplastique présentant une dureté Shore de 60 A à 50 D, et
(b) des caoutchoucs d'éthylène-propylène (EPM) non modifiés et/ou des caoutchoucs d'éthylène-propylène (EPM) modifiés, qui sont greffés avec de l'acide acrylique, de l'acide méthacrylique, leurs dérivés et/ou de l'anhydride maléique,
le rapport pondéral entre (a) et (b) étant de 3/1 à 999/1.

2. Mélange suivant la revendication 1, **caractérisé en ce que** le rapport pondéral est de 6/1 à 100/1.

3. Utilisation de mélanges suivant la revendication 1, pour la fabrication par extrusion de gainages de câble, de feuilles, de tuyaux souples, de fibres, de profilés ou de corps soufflés, pour la fabrication par coulage par injection de tiges de chaussure, de semelles, de pièces moulées industrielles, d'articles utilitaires ou de corps façonnés de tous types, et pour la fabrication par calandrage de revêtements ou feuilles.

4. Gainages de câble, feuilles, tuyaux souples, fibres, profilés, tiges de chaussures, semelles, pièces moulées industrielles, articles utilitaires, corps façonnés de tous types, revêtements ou feuilles selon la revendication 3.
